# EUROPEAN PATENT SPECIFICATION

(11) **EP 0 619 643 B1**
(45) Date of publication and mention of the grant of the patent: **10.01.1996**
(21) Application number: 94101865.7
(22) Date of filing: 08.02.1994
(51) Int. Cl.: H02M 5/27

(54) **Alternate voltage, adjustable dissymmetric wave feeder, particularly suitable for processes of electrolytic colouring of aluminium, its alloys and the like**
Einstellbare, unsymetrische Wechselstromwellen Versorgung für Verfahren für elektrolytische Aluminium-/Aluminiumlegierung-Färbung und ähnliche Verfahren
Alimentation ajustable d'ondes assymétriques en courant, alternatif pour procédés de coloration d'aluminium, d'alliages d'aluminium et procédés semblables

(30) Priority: 08.04.1993 IT MI930703
(43) Date of publication of application: 12.10.1994
(73) Proprietor: ELCA S.r.l., I-25020 Fornaci-Brescia BS (IT)
(72) Inventor: Blesio, Luigi, I-25020 Fornaci-Brescia BS (IT)
(74) Representative: Trupiano, Roberto

(56) References cited:
- CONFERENCE RECORD IEEE-IAS-1985 ANNUAL MEETING, October 1985, TORONTO, CANADA pages 1055 - 1061 JOSE RODRIGUEZ 'A FOUR-QUADRANT TRANSISTOR RECTIFIER IN BRIDGE CONNECTION WITH SINUSOIDAL INPUT CURRENTS'

## Description

This invention relates to a monophase alternate voltage electric feeder with dissymmetric waveforms whose amplitude and duration is adjustable, particularly suitable for carrying out processes of electrolytic colouring of aluminium, its alloys and the like.

As is known, electrolytic colouring of aluminium and its metal alloys is, substantially, an electrolytic process carried out in the presence of particular colouring metal salts, which, depositing on the surface, give the latter the colour required.

It is also known that the electrochemical process of aluminium electrolyic colouring needs, as a feed source of electric power, a feeding device capable of supplying a voltage characterized by consecutive reverse polarity and means suitable for the necessary adjustment of the parameters of said voltage.

To this purpose, the feeding apparatuses utilized by prior art are normally constituted by a monophase transformer, suitable to reduce the alternate voltage of the mains to the required value - normally 20-25 V- and by systems for adjusting the values of the supplied voltage to the process requirements.

The systems utilized by prior art for adjusting the voltage supplied by the secondary of the transformer provide in some cases for the inclusion, above the transformer-reducer, of a self-transformer continuously adjustable through the shifting of sliding brushes; in other cases, a set of taps are utilized which are inserted on the primary winding of the monophase transformer, so that the adjustment of the values of the supplied voltage is realizable only "stepwise" and not continuously; in this case, compensation means interposed between adjacent taps may also be provided.

In all these cases, the voltage available also after the adjustment is always of the alternate sinusoidal type and has the same frequency as the one supplied by the main grid system.

Feeders are also known which utilize electronic circuits capable of realizing a "partialization" of the two positive and negative half waves, i. e. of realizing incomplete half waves, so that the waveform is dissymmetric and may prove useful for special electrolytic colouring processes; however, this type of dissymmetric waveform has the drawback of involving a continuous component, due to the inequalities of the two areas of the positive and negative halfwaves, which can jeopardise the performance of the transformer, due to the possible saturation of its magnet core.

In practice, therefore, the feeders utilized by prior art have first of all the drawback of taking the power from the three-phase network with the monophase system, involving therefore only two charged phases, with ensuing unbalance of the currents; besides, the feeders that utilize for the adjustment a self-transformer or a set of taps, involve non static adjustment types, and therefore are not fully reliable in the long run, while feeders that provide for the partialization of the two positive and negative half waves may cause the magnetic saturation of the transformer core and an ensuing high value of absorbed current.

In the publication "Conference Record-IEEE-IAS-1985" Library of Congress N°806405-27 a rectifier provided with transistors connected bridge-like is disclosed, suitable to connect directly a three-stage source to a load (usually a d.c. servomotor). Said transistors are bidirectional switches capable of emitting at the outlet from the rectifier a one-stage voltage; they are fed by an ignition, control and bidirectional regulation circuit, capable of giving the voltage at the outlet from the rectifier wave forms having a reverse polarity relatively to the voltage from the rectifier. In this case the positive half-waves depend on the negative ones, so that this type of wave form, although it can be regulated, cannot be utilized in the field of electro-colouring where, besides the successive polarity reversals, other devices are needed to regulate all the parameters of said voltage, such as duration, amplitude, ramp speed of half-waves, to obtain disymmetrical half-waves variable according to the requirements.

An object of this invention is, therefore, to provide a feeder for realizing processes of electrolytic colouring of aluminium and its alloys, designed and realized in such a way as to provide a waveform of monophase alternate current utilizing fully static - and therefore reliable in the long run - adjustment means, taking the power from the three-phase, instead of the monophase feeding network, and without the drawback of the magnetic saturation of the transformer core.

Another object of this invention is to provide a feeder of the above mentioned type incorporating adjustment means which permit to program and possible store through a process computer the duration and amplitude of the two positive and negative half waves, the ramp times of the half waves, as well as to supply both direct and alternate current and to set the duration of their phase.

These and still further objects, which shall be more clearly disclosed by the following description, are achieved according to the subject-matter of claim 1 by an a.c. monophase adjustable wave electric feeder, particularly suitable for the processes of electrolytic colouring of aluminium, its alloys and the like, which feeder is constituted, according to this invention, by a reducer-transformer of three-phase voltage whose phases of the secondary circuit are connected to a d.c. rectifying circuit of the controlled diode, bidirectional type, a regulation and ignition circuit being associated to the diodes of the former circuit, the latter circuit being suitable to cause consecutive polarity inversions to the current supplied by said rectifier, said ignition circuit being constituted by a generator of positive and negative pulses which, after a check with a voltage signal taken at the outlet of the rectifier and with following stages of amplification and transformation, constitute the ignition pulses for said diodes, necessary to obtain an output voltage from said rectifier having a reverse polarity waveform and to allow the adjustment to be independent on the durations and amplitudes of both positive and negative half waves.

More particularly, said adjustment of the alternate waveform is preferably interlocked with an opportunely programmed computer, suitable to determine and store the duration and amplitude of positive half waves, independently on the negative ones, the ramp times and also the work duration of the d.c. or a.c. feeder.

Further characteristics and advantages of this invention shall be more clearly disclosed by the following detailed description, wherein reference is made to the attached drawing given only by non limitative way of example, wherein:
Fig. 1 shows the complete unifilar circuit diagram of a feeder for realizing electrolytic colouring processes, realized according to this invention;
Fig. 2 shows, in a more complete form, the circuit diagram of the d.c. bidirectional rectifier only, which makes part of the circuit of Fig. 1, while
Fig. 3 shows an example of adjustable dissymmetric monophase alternate waveform, achievable with the feeder of Fig. 1.

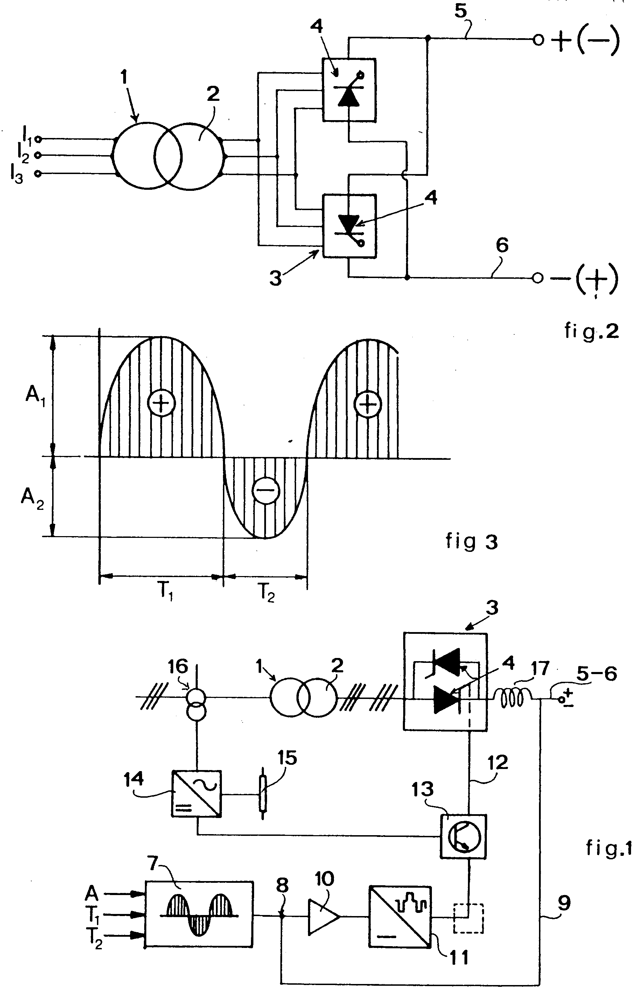

With reference to the above mentioned figures, in order to obtain a monophase current characterized by consecutive reverse polarity, as required for feeding the processes of electrolytic colouring of aluminium and its alloys, utilizing three-phase electric power as feeding source, this invention utilizes an apparatus comprising a three-phase transformer 1, capable of lowering up to 20-25 V the feeding voltage, wherein the output stages from the secondary circuit 2 are connected to a static d.c. bidirectional rectifying circuit, globally indicated by 3, i.e. a circuit of the type with couples of controlled diodes 4 (Figs. 1 and 2), arranged antiparallelly relatively to one another.

The output currents supplied by said couples of diodes 4 are taken by two conductors 5 and 6 at whose ends a monophase direct or alternate voltage is available.

To realize the required periodic reverses of the polarity of the voltage supplied by rectifier 3, an ignition circuit is utilized for said diodes 4, capable of allowing, besides the achievement of an alternate waveform having the wished dissymmetry, also the possibility of an independent adjustment of the durations and related amplitudes of the positive and negative half waves, and also of allowing the working with either direct or alternate current.

Said ignition circuit of diodes 4 is constituted, according to the unifilar diagram, by a generator of reference waves 7, whose amplitude and duration can be adjusted either by means of hand devices of through a process computer, as will be better explained in the following.

The pulses supplied by said generator 7 are then checked, on a node 8, with a voltage signal taken from the output conductors 5-6 through a conductor 9, then amplified by means of an operational amplifier 10 and then transformed by means of a voltage transformer 11; the pulses supplied by transformer 11 are sent through conductors 12 to the gates of diodes 4 of rectifier 3, so as to realize the preset ignition of said diodes.

Therefore, by acting on the ignition of diodes 4, various types of alternate waveforms can be achieved (supplied at end 5-6), i. e. a monophase voltage having dissymmetric waveforms by adjusting the amplitude and duration of the half waves, as shown, by way of example, on Fig. 3, wherein A1 and A2 are the amplitudes of the half waves and T1-T2 the times, i.e. the durations of said half waves.

Both the duration and the amplitudes, besides other parameters such as the ramp times, can be adjusted by acting by hand devices on the generator of reference waves or, preferably, by means of a process computer (not shown), suitable to allow to program and possibly store:
a) the duration of the negative half wave (1 to 999 hundredth second)
b) the duration of the negative half wave (1 to 999 hundredth second) (with the possibility, in particular, of working only with direct current if the duration of one of the two half waves is set at zero value)
c) the amplitude of the two half waves (0 to 100%)
d) the ramp times (1 to 999 seconds or 1 to 999 minutes) within which the final running value has to be achieved, both with a.c. and d.c.
e) the duration of the phase working with d.c. only (1 to 999 seconds or 1 to 999 minutes)
f) the duration of the phase working with a.c. (1 to 999 seconds or 1 to 999 minutes).

Always according to this invention, the generator of reference waves 7 may be completed by a maximum current limiting circuit (Fig. 1), constituted by a block circuit 13 of the ignition pulses, d.c. fed through a bridge transducer 14, provided with a potentiometer 15, inserted on the feed network through a transformer 16. Lastly, the above described feeder provides on the output conductors 5-6 an equalization inductance 17, suitable to contribute to a perfect formation of the output waveform.

From the aforementioned disclosure, the feeder subject matter of this invention has, relatively to those utilized by prior art in the field of aluminium electrolytic colouring, at least the following advantages: a) taking of the power on three phases, hence without current unbalances, b) absence of saturation of the magnet-core of the transformer, in spite of the dissymmetry of the output waveforms, and c) wide possibilities of adjusting the parameters of the output waveforms and of working, if necessary, also with d.c. or a.c. only.

## Claims

1. Monophase AC electric feeder with adjustable disymetric waves, suitable for process of electrolytic colouring of Aluminium and its alloys, comprising a three-phase voltage transformer-reducer (1,2), whose phases of the secondary circuit (2) are connected to a DC bidirectional rectifying circuit (3) suitable to supply a monophase voltage at the outlet (5,6) of said rectifying circuit, characterized in that said bidirectional rectifying circuit (3) is composed of two controlled diodes (4) to which an ignition and adjustment circuit (7) is associated, suitable to cause consecutive polarity reverses to the voltage supplied by said rectifier (3), said ignition and adjustment circuit (7) being constituted by a bidirectional type generator of references waves, composed by two separate electronic timers suitable to generate substantially positive and negative half-waves with independent adjustable amplitude and duration, the pulses corresponding to said positive and negative half-waves, after a check (8) with a voltage signal taken at the outlet of the rectifier and following amplification (10) and transformation (11), constituting the ignition pulses for said diodes (4), suitable to obtain, at the outlet (5,6) of said rectifying circuit (3), positive half-waves independent, as to the duration and amplitude, of the negative half-waves.

2. Feeder according to claim 1, characterized in that said adjustment of the alternate waveforms is interlocked with a programmed process computer, suitable to determine and store the duration and amplitude of the positive half waves independently of the negative ones, the ramp times as well as the duration of the working phase of the D.C. or A.C. rectifying circuit (3).

3. Feeder according to claim 1, characterized in that said adjustment of the waveform is achieved by means of hand controlled devices.

4. Feeder according to claim 1, characterized in that at least an equalization inductance (17) of the achieved waveform is provided on the output conductors.

5. Feeder according to claim 1, characterized in that said generator of reference waves may be provided with a maximum current limitating circuit comprising a block circuit (13, 14, 15) of the ignition pulses.

## Patentansprüche

1. Einphasen-Wechselstrom-Versorgungseinrichtung mit einstellbaren asymmetrischen Wellen für ein Verfahren der elektrolytischen Färbung von Aluminium und dessen Legierungen, umfassend eine Dreiphasen-Spannungs-Transformations-Reduziereinrichtung (1, 2), deren Phasen der sekundären Schaltung (2) mit einer bidirektionalen Gleichstrom-Gleichrichtungsschaltung (3), die zur Bereitstellung einer einphasigen Spannung am Ausgang (5, 6) der Gleichrichtungsschaltung geeignet ist, verbunden sind, dadurch gekennzeichnet, daß die bidirektionale Gleichrichtungsschaltung (3) zusammengesetzt ist aus zwei gesteuerten Dioden (4), der eine Zünd- und Einstellschaltung (7) zugeordnet ist, die aufeinanderfolgende Polaritätsumkehrvorgänge der vom Gleichrichter (3) gelieferten Spannung hervorrufen kann, wobei die Zünd- und Einstellschaltung (7) von einem Referenzwellengenerator vom bidirektionalen Typ gebildet wird, der aus zwei getrennten elektronischen Zeitgebern zur Erzeugung von im wesentlichen positiven und negativen Halbwellen mit unabhängig einstellbarer Amplitude und Dauer besteht, wobei die den positiven und negativen Halbwellen entsprechenden Impulse nach einer Überprüfung (8) mit einem am Ausgang des Gleichrichters entnommenen Signal und unter anschließender Verstärkung (10) und Transformation (11) die Zündimpulse für die Dioden (4) darstellen, die geeignet sind, um am Auslaß (5, 6) der Gleichrichtungsschaltung (3) positive Halbwellen zu erhalten, die in bezug auf Dauer und Amplitude unabhängig von den negativen Halbwellen sind.

2. Versorgungseinrichtung nach Anspruch 1, dadurch gekennzeichnet, daß die Einstellung der alternierenden Wellenformen mit einem programmierten Prozeßcomputer verbunden ist, der zur Bestimmung und Speicherung der Dauer und der Amplitude der positiven Halbwellen unabhängig von den negativen Halbwellen sowie der Anstiegszeit und der Dauer der Arbeitsphase der Gleichstrom- oder Wechselstrom-Gleichrichterschaltung (3) geeignet ist.

3. Versorgungseinrichtung nach Anspruch 1, dadurch gekennzeichnet, daß die Einstellung der Wellenform mittels von Hand gesteuerter Vorrichtungen erreicht wird.

4. Versorgungseinrichtung nach Anspruch 1, dadurch gekennzeichnet, daß mindestens eine Ausgleichsinduktivität (17) der erreichten Wellenform an den Ausgangsleitern vorgesehen ist.

5. Versorgungseinrichtung nach Anspruch 1, dadurch gekennzeichnet, daß der Referenzwellengenerator mit einer den Maximalstrom begrenzenden Schaltung ausgerüstet ist, die eine Blockschaltung (13, 14, 15) für die Zündimpulse umfaßt.

## Revendications

1. Alimentateur électrique à tension alternative uniphasée avec des ondes dissymétriques réglables, apte aux procédés de coloration électrolytique de l'aluminium et de ses alliages comprenant un transformateur-dévolteur de tension triphasé (1, 2) dont les phases du secondaire (2) sont connectées à un circuit redresseur à courant continu du type bidirectionnel (3) apte à fournIr une tension uniphasée à la sortie (5, 6) dudit circuit redresseur caracterisé en ce que ledit circuit redresseur bidirectionnel (3) se compose de deux diodes controlés (4) auxquels est associé un circuit d'ignition et de réglage (7) apte à fournir des inversions successives de polarité à la tension fournie par ledit redresseur (3), ledit circuit d'ignition et de réglage (7) se compose d'un générateur d'ondes de repère du type bidirectionnel étant constitué par deux temporisateurs électroniques séparés aptes à créer des démi-ondes substantiellement positives et négatives avec une amplitude et une durée indépendentes Réglables, les impulsions correspondant auxdites demi-ondes positives et négatives, après une comparaison (8) avec un signal du tension prélevé à la sortie du redresseur et suivant les étages d'amplification (10) et de transformation (11), qui constituent les impulsions d'ignition pour lesdits diodes (4), pour obtenir à la sortie (5, 6) dudit circuit de rectification (3) des demi-ondes positives independantes quant à la durée et à l'amplitude, des demi-ondes négatives.

2. Alimentateur selon la révendication 1, caracterisé en ce que ledit reglage de la forme d'onde alternative est asservi à un calculateur électronique programmé susceptible de determiner et de mémoriser la durée et l'amplitude des demi-ondes positives indépendemment de celles négatives, les temps de rampe ainsi que la durée de la phase de fonctionnement du circuit du redresseur en courant continu ou alternatif (3).

3. Alimentateur selon la révendication 1, caracterisé en ce que ledit réglage de la forme d'onde est obtenu au moyen de dispositifs controlés à la main.

4. Alimentateur selon la révendication 1, caracterisé en ce qu'il est prevu sur les conducteurs de sortie au moins une inductance de nivellement (17) de la forme d'onde obtenue.

5. Alimentateur selon la révendication 1, caracterisé en ce que ledit générateur des ondes de répère peut être muni d'un circuit limiteur de courant maximum comprénant un circuit de blocage (13, 14, 15) des impulsions d'ignition.
